# EUROPEAN PATENT APPLICATION

(11) **EP 2 354 763 A2**
(43) Date of publication of application: **10.08.2011**
(21) Application number: 11152831.1
(22) Date of filing: 01.02.2011
(51) Int. Cl.: G01C 21/28

(54) **Navigation method and electronic apparatus with navigation function**

(30) Priority: 06.02.2010 TW 099103609
(71) Applicant: HTC Corporation, Taoyuan County 330 (TW)
(72) Inventor: Tsai, Ching-Jung, 330, Taoyuan City, Taoyuan County (TW); Chen, Tai-Chuan, 330, Taoyuan City, Taoyuan County (TW)
(74) Representative: 2K Patentanwälte Blasberg Kewitz & Reichel

(57) **Abstract**

A navigation method and an electronic apparatus with navigation function are disclosed. The method includes the following steps. When it is navigated to a substantial junction of an ordinary road and an elevated road (S110), a detection signal outputted from a detector of the electronic apparatus is read (S120), wherein the detection signal indicates variations in a physical quantity along at least two directional axes. Next, a determination regarding whether the electronic apparatus is on the elevated road is made according to the detection signal (S130). If the electronic apparatus is on the elevated road, it is navigated to the elevated road (S140). If the electronic apparatus is not on the elevated road, the navigation proceeds based on the ordinary road (sol50). According to the embodiment of this method, the navigation can be made accurately and in time when it is navigated to the junction.

## Description

This application claims the benefit of Taiwan application Serial No. 99103609, filed February 6, 2010, the subject matter of which is incorporated herein by reference.

### BACKGROUND

### TECHNICAL FIELD

The disclosure relates in general to a navigation method and a navigation apparatus, and more particularly to a navigation method and a navigation apparatus capable of determining whether it is on an elevated road.

### DESCRIPTION OF THE RELATED ART

In the modern industrial environment, in which the technology is progressing, it is very popular that a hand-held apparatus or a vehicle apparatus is installed with the navigation software to perform the navigation. At present, the navigation software assumes that the user is on a plane geographic position serving as the navigation basis. Thus, when the user enters the elevated road from the ordinary road, the navigation software often continuously assumes that the user is still on the ordinary road and thus proceeds with the path planning based on the ordinary road so that the user may get confused.

In order to solve the above-mentioned problem, the conventional navigation software cannot determine whether the user is on the elevated road according to the geographic information and thus cannot calibrate the path planning until the conventional navigation software finds that the position of the user cannot be navigated or does not match with the geographic information. It is to be noted that the navigation software must wait for a predetermined period of time and then make this determination and calibration operations. If the determination result still represents that the user is on the ordinary road, and the path is still planned based on the ordinary road, then the user cannot obtain the correct navigation information when he or she is driving. Even though the calibration can be obtained in this manner, the user cannot obtain the path planning in time. Thus, when the user enters the elevated road from the ordinary road, the incorrectly planned path or the relatively delayed phenomenon may occur.

### SUMMARY

The disclosure is directed to a navigation method and an electronic apparatus with navigation function. When it is navigated to a junction of an ordinary road and an elevated road, a determination regarding whether it is on the elevated road can be made so that the navigation can be made accurately and in time.

According to a first aspect of the present disclosure, a navigation method adapted to an electronic apparatus is provided. The method includes the following steps. When it is navigated to a substantial junction of an ordinary road and an elevated road, a detection signal outputted from a detector of the electronic apparatus is read, wherein the detection signal indicates variations in a physical quantity along at least two directional axes. Then it is determined whether the electronic apparatus is on the elevated road according to the detection signal. If the electronic apparatus is on the elevated road, navigation to the elevated road is made. If the electronic apparatus is not on the elevated road, the navigation proceeds based on the ordinary road.

According to a second aspect of the present disclosure, an electronic apparatus including a positioning module, a detector and a processing module is provided. The positioning module positions the electronic apparatus to obtain position information of the electronic apparatus. The detector outputs a detection signal, which indicates variations in a physical quantity along at least two directional axes. The processing module, coupled to the positioning module and the detector, performs navigation according to the position information. When the processing module navigates to a substantial junction of an ordinary road and an elevated road according to the position information, the processing module reads the detection signal and thus determines whether the electronic apparatus is on the elevated road. If the electronic apparatus is on the elevated road, the processing module navigates to the elevated road according to the position information. If the electronic apparatus is not on the elevated road, the processing module proceeds with the navigation based on the ordinary road according to the position information.

According to a third aspect of the present disclosure, a computer program product for executing a navigation method in an electronic apparatus having a buffer memory is provided. The computer program product is capable of performing the above-mentioned method after the electronic apparatus loads and executes the computer program product.

According to a fourth aspect of the present disclosure, a computer readable storage medium for storing program code or a plurality of commands, which can be executed by a computing apparatus, is provided. After the computing apparatus executes the commands, the computing apparatus performs the above-mentioned navigation method.

The above and other aspects of the disclosure will become apparent from the following detailed description of the preferred but nonlimiting embodiments. The following description is made with reference to the accompanying drawings.

### BRIEF DESCRIPTION OF THE DRAWINGS

FIG 1 shows a method of determining whether a user is on an elevated road according to an embodiment of the disclosure.

FIG. 2 is a block diagram showing a system of a hand-held apparatus with navigation function according to an embodiment of the disclosure.

### DETAILED DESCRIPTION

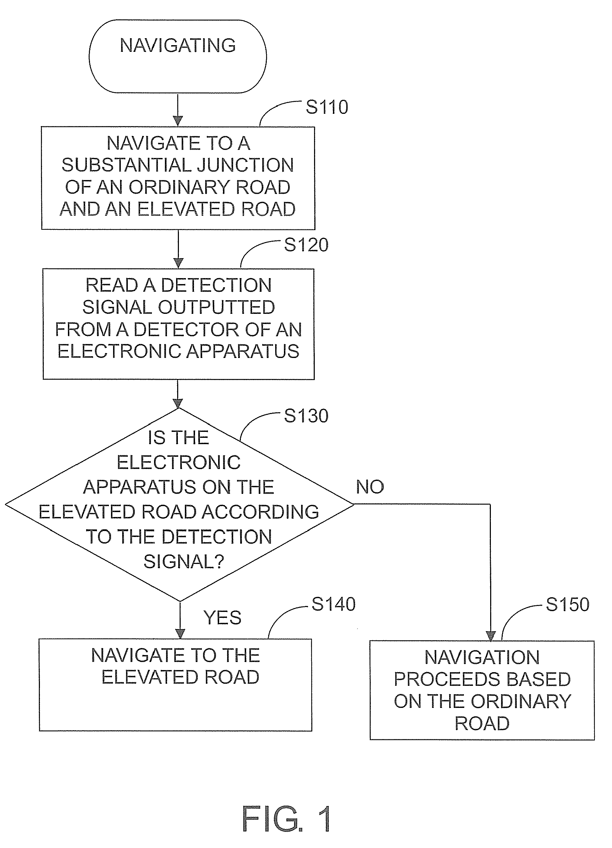

FIG. 1 shows a method of determining whether a user is on an elevated road according to an embodiment of the disclosure. As shown in FIG. 1, the navigation method is adapted to an electronic apparatus, which performs navigation based on a global positioning system (GPS), and plans a path according to geographic information or map information to navigate a user to a set destination. According to the embodiment of the disclosure, the user adopts this electronic apparatus with the navigation and the navigation method of this embodiment to determine whether the electronic apparatus is on the elevated road so that the correct path planning and navigation can be made.

In step S110 of FIG. 1, the navigation apparatus navigates to a substantial junction of an ordinary road and an elevated road. At this time, as shown in step S120, a detection signal outputted from a detector of the electronic apparatus is read. The detection signal indicates variations in a physical quantity along at least two directional axes. The detector used in the step S120 includes, for example, an accelerometer (or G-detector) or a gyro-meter, which can detect the variations in the physical quantity along at least two directional axes, such as the accelerations along the horizontal axis and the vertical axis or the angular velocities along two directional axes.

Next, in step S130, it is determined whether the electronic apparatus is on the elevated road according to the detection signal. According to the determination result of the step 5130, if the electronic apparatus is on the elevated road, it is navigated to the elevated road, as shown in step S140. If the electronic apparatus is not on the elevated road, the navigation proceeds based on the ordinary road, as shown in step 5150.

In step S110, the navigation to the substantial junction of the ordinary road and the elevated road may be determined according to the map information and the position information of the electronic apparatus. The practical navigation software is well known in the art, so detailed descriptions thereof will be omitted. The detector used in step 5120 may be, for example, a three-axis accelerometer or a three-axis gyro-meter. The meaning in step S130 is to obtain whether the electronic apparatus leaves the ordinary road, speeds up or slows down according to the detection signal. For example, according to the detection signal, the variations in the transversal and longitudinal positions of the electronic apparatus are obtained so as to determine whether the electronic apparatus is on the elevated road. In another example, according to the detection signal, the variations in the vertical level and the acceleration of the electronic apparatus are obtained so as to determine whether the electronic apparatus is on the elevated road. In other example, the variations along multiple directional axes may be adopted to make the more precise determination. In practice, of course, the determination may be made by reading the information indicated by the detection signal once or multiple times and then processing the read information.

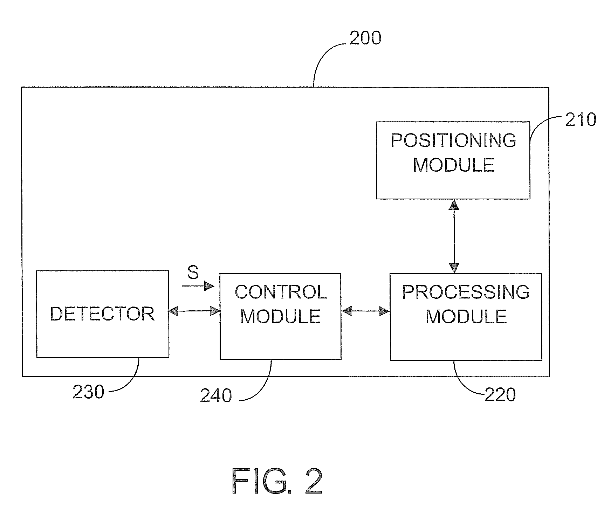

FIG. 2 is a block diagram showing a system of a hand-held apparatus with navigation function according to an embodiment of the disclosure. Referring to FIG. 2, an electronic apparatus 200 includes a positioning module 210, a processing module 220, and a detector 230. This electronic apparatus 200 can perform the above-mentioned navigation method. The positioning module 210 may be, for example, a positioning module based on the GPS. The detector 230 includes, for example, an accelerometer or a gyro-meter.

The positioning module 210 positions the electronic apparatus 200 to obtain the position information of the electronic apparatus 200. For example, the geographic coordinates of the electronic apparatus 200 are obtained according to the GPS positioning signal. The detector 230 outputs a detection signal S, which indicates variations in a physical quantity along at least two directional axes, as mentioned hereinabove. The processing module 220, coupled to the positioning module 210 and the detector 230, performs the navigation according to the position information. Taking a hand-held apparatus with navigation function or a navigation apparatus as an example of the electronic apparatus 200, the electronic apparatus 200 is typically built with the map information, or can read or download the map information from the external device, and the user can input the destination through the user interface of the electronic apparatus so that the electronic apparatus 200 can navigate the user to the destination, wherein the map information includes the geographic information of the roads or the elevated roads.

When the processing module 220 navigates the user to a substantial junction of an ordinary road and an elevated road according to the position information, the processing module 220 reads the detection signal S from the detector 230 and thus determines whether the electronic apparatus 200 is on the elevated road. If the processing module 220 determines that the electronic apparatus 200 is on the elevated road, the processing module 220 navigates the user to the elevated road according to the position information. If the processing module 220 determines that the electronic apparatus 200 is not on the elevated road, the processing module 220 proceeds with the navigation based on the ordinary road according to the position information.

In addition, based on the basic system structure of FIG. 2, when the electronic apparatus 200 is implemented as, for example, a hand-held apparatus, such as a mobile phone, a personal digital assistant, a multimedia player or a navigation apparatus, a vehicle computer or a vehicle navigation apparatus, different structures may be provided or various modules or circuits may be added according to the requirements in various embodiments. Thus, the implementation is not particularly restricted to FIG. 2. For example, in another embodiment, a control module 240 may be added and disposed between the processing module 220 and the detector 230 of the electronic apparatus 200. The control module 240, for example, may be implemented by an application specific integrated circuit (ASIC) to serve as an interface or auxiliary logic, such as an interface between the detector and the processing module, for signal conversion. In other embodiments such as mobile phones or portable navigation apparatuses, memories, displays, or other communication modules may be added.

In addition, in other embodiments, the navigation may be performed according to the additional information, such as the road information, the traffic flow information or the building information.

The disclosure also provides an embodiment of a computer readable storage medium, on which a program (program code or a plurality of commands) is stored. A computing device executing this program can perform the navigation method of the embodiment of the disclosure. The computer readable storage medium of this embodiment includes, without limitation to, an optical information storage medium, a magnetic information storage medium, or memory such as ROM, RAM, a memory card, firmware, or built-in memory of a microcontroller. In addition, the computer readable storage medium may also include program codes, which may be transmitted through the netvvork/transmission medium, such as air.

The disclosure additionally provides an embodiment of a computer program product. After the electronic apparatus having a buffer memory loads the computer program product, the electronic apparatus executes multiple program commands, which perform the navigation method according to the embodiment of the disclosure.

In summary the navigation method and the electronic apparatus according to the above embodiment of the disclosure can determine whether the user is on the elevated road and thus make the correct path planning and navigation so that the navigation may be made accurately and in time. Thus, the electronic apparatus with navigation function can further satisfy the user's requirements on the response time and the accuracy so that the correct navigation and path planning can be made and the user can reach the destination. A navigation method and an electronic apparatus with navigation function are disclosed. The method includes the following steps. When it is navigated to a substantial junction of an ordinary road and an elevated road, a detection signal outputted from a detector of the electronic apparatus is read, wherein the detection signal indicates variations in a physical quantity along at least two directional axes. Next, a determination regarding whether the electronic apparatus is on the elevated road is made according to the detection signal. If the electronic apparatus is on the elevated road, it is navigated to the elevated road. If the electronic apparatus is not on the elevated road, the navigation proceeds based on the ordinary road. According to the embodiment of this method, the navigation can be made accurately and in time when it is navigated to the junction.

While the disclosure has been described by way of examples and in terms of preferred embodiments, it is to be understood that the disclosure is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A navigation method adapted to an electronic apparatus, the method comprising the steps of:
when it is navigated to a substantial junction of an ordinary road and an elevated road:
reading a detection signal outputted from a detector of the electronic apparatus, wherein the detection signal indicates variations in a physical quantity along at least two directional axes; and
determining whether the electronic apparatus is on the elevated road according to the detection signal;
navigating to the elevated road if the electronic apparatus is on the elevated road; and
proceeding with navigation based on the ordinary road if the electronic apparatus is not on the elevated road.

2. The method according to claim 1, wherein according to the detection signal, variations in transversal and longitudinal positions of the electronic apparatus are obtained so as to determine whether the electronic apparatus is on the elevated road.

3. The method according claims 1, wherein according to the detection signal, variations in a vertical level and an acceleration of the electronic apparatus are obtained so as to determine whether the electronic apparatus is on the elevated road.

4. The method according to one of claims 1 to 3, wherein the detector comprises an accelerometer.

5. The method according to one of claims 1 to 3, wherein the detector comprises a gyro-meter.

6. A computer program product for executing a navigation method in an electronic apparatus having a buffer memory, the computer program product being capable of performing the method according to claim 1 after the electronic apparatus loads and executes the computer program product.

7. The computer program product according to claim 6, wherein the computer program product is stored in a computer readable storage medium.

8. An electronic apparatus with a navigation function, the apparatus comprising:
a positioning module for positioning the electronic apparatus to obtain position information of the electronic apparatus;
a detector for outputting a detection signal, which indicates variations in a physical quantity along at least two directional axes; and
a processing module, coupled to the positioning module and the detector, for performing navigation according to the position information; wherein when the processing module navigates to a substantial junction of an ordinary road and an elevated road according to the position information, the processing module reads the detection signal and thus determines whether the electronic apparatus is on the elevated road;
if the electronic apparatus is on the elevated road, the processing module navigates to the elevated road according to the position information; and
if the electronic apparatus is not on the elevated road, the processing module proceeds with the navigation based on the ordinary road according to the position information.

9. The electronic apparatus according to claim 8, wherein the processing module obtains variations in transversal and longitudinal positions of the electronic apparatus according to the detection signal so as to determine whether the electronic apparatus is on the elevated road.

10. The electronic apparatus according to claim 8, wherein the processing module obtains variations in a vertical level and an acceleration of the electronic apparatus according to the detection signal so as to determine whether the electronic apparatus is on the elevated road.

11. The electronic apparatus according to one of claims 8 to 18, wherein the detector comprises an accelerometer.

12. The electronic apparatus according to one of claims 8 to 11, wherein the detector comprises a gyro-meter.

13. The electronic apparatus according to one of claims 8 to 12, wherein the electronic apparatus is a hand-held apparatus.

14. The electronic apparatus according to claim 13, wherein the hand-held apparatus is a mobile phone, a personal digital assistant, a multimedia player or a navigation apparatus.

15. The electronic apparatus according to one of claims 8 to 14, wherein the electronic apparatus is a vehicle computer or a vehicle navigation apparatus.
